Europäisches Patentamt

European Patent Office

Office européen des brevets

(19)

(11) Veröffentlichungsnummer: **0 023 289**

A1

# (12) EUROPÄISCHE PATENTANMELDUNG

(21) Anmeldenummer: 80103861.3

(22) Anmeldetag: 07.07.80

(51) Int. Cl.³: **H 04 B 1/38**
H 04 B 7/26, H 04 B 5/02

(30) Priorität: 27.07.79 DE 2930580

(43) Veröffentlichungstag der Anmeldung:
04.02.81 Patentblatt 81/5

(84) Benannte Vertragsstaaten:
AT BE CH FR GB IT LI LU NL SE

(71) Anmelder: KATHREIN-WERKE KG
Luitpoldstrasse 18 - 20 Postfach 260
D-8200 Rosenheim 2(DE)

(72) Erfinder: Boethun, Oddvar
Amsterdamvej 28
DK-2300 Kopenhagen S(DK)

(72) Erfinder: Hansen, Flemming
Hjortevaenget 9
DK-2880 Bagsvaerd(DK)

(72) Erfinder: Steffke, Josef
Geigelsteinweg 2
D-8201 Schlossberg(DE)

(72) Erfinder: Kimmel, Rainer
Ganghoferstrasse 14
D8201 Schlossberg(DE)

(74) Vertreter: Weickmann, Heinrich, Dipl.-Ing
Patentanwälte Dipl.Ing.H.Weickmann et al,
Dipl.Phys.Dr.K.Fincke Dipl.Ing.F.A.Weickmann
Dipl.Chem.B.Huber, Dr.-Ing.H.Liska Möhlstrasse 22
D-8000 München 86(DE)

(54) **Vorrichtung zur Ankopplung einer an einem Fahrzeug angebrachten Sende-Empfangs-Antenne mit einem Sende-Empfangs-Gerät.**

(57) Vorrichtung zur Ankopplung einer an einem Fahrzeug, insbesondere an einem Polizeikraftfahrzeug, angebrachten Sende-Empfangs-Antenne (4) mit einem tragbaren Sende-Empfangs-Gerät (12), wobei eine in dem Fahrzeug (2) angeordnete Koppelsonde (16) mit der Sende-Empfangs-Antenne (4) verbunden ist.

EP 0 023 289 A1

DCH

- 1 -

Vorrichtung zur Ankopplung einer an einem Fahrzeug angebrachten Sende-Empfangs-Antenne mit einem Sende-Empfangs-Gerät

Die Erfindung betrifft eine Vorrichtung zur Ankopplung einer an einem Fahrzeug, insbesondere an einem Polizeikraftfahrzeug, angebrachten Sende-Empfangs-Antenne mit einem tragbaren Sende-Empfangs-Gerät.

Ein tragbares Sende-Empfangs-Gerät (Funkgerät) ist für viele Anwender, vor allem für Polizisten, ein unentbehrlicher Helfer geworden. Für den Polizisten im Einsatz muß in jeder Situation eine Funkverbindung zur Verfügung stehen; er darf jedoch in seiner Bewegungsfreiheit nicht eingeengt sein und er muß beide Hände für seine eigentliche Tätigkeit frei haben.

Diese Forderung wird durch Handfunkgeräte, die mit einem Gurt am Körper getragen werden und die mit kurzen Antennen ausgerüstet sind, gut erfüllt.

Problematisch wird es dann, wenn der Polizist, der sich mit dem Handfunkgerät im Freien aufgehalten hat, in ein Fahrzeug steigt. Durch die abschattende Wirkung der Fahrzeugkarosserie ist das Handfunkgerät hier nicht mehr verwendbar und der Polizist muß eine besondere Funkstation im Fahrzeug in Betrieb nehmen. Der Polizist muß also beim Einsteigen in das Fahrzeug bzw. beim Verlassen des Fahrzeugs von einer Funkstation auf die andere Funkstation umwechseln, was Zeit erfordert und Fehlermöglichkeiten bzw. Falschverbindungen zur Folge haben kann. Der Polizist soll jedoch in jeder Situation schnell reagieren können und es ist daher sehr störend, wenn er mit der häufigen Neuinbetriebnahme von verschiedenen Funkgeräten beschäftigt ist.

Aufgabe der Erfindung ist es, dem Polizisten zu ermöglichen, sowohl im Freien als auch im Fahrzeug das gleiche Funkgerät zu benützen, ohne beim Ein- bzw. Aussteigen Vorkehrungen treffen zu müssen.

Zur Lösung dieser Aufgabe ist die Vorrichtung eingangs genannter Art gekennzeichnet durch eine in dem Fahrzeug angeordnete, mit der Sende-Empfangs-Antenne verbundene Koppelsonde.

Bei Anwendung der Erfindung braucht der Polizist beim Ein- bzw. Aussteigen an seinem Funkgerät keine Vorkehrungen zu treffen. Er kann sowohl im Freien als auch im Fahrzeug ohne Änderung des Bedienungszustandes das gleiche Funkgerät benutzen. Im Freien ist die Antenne des tragbaren Funkgeräts unmittelbar wirksam. Im Fahrzeug wirkt sie über die Koppelsonde auf die Sende-Empfangs-Antenne am Fahrzeug.

Um eine im Fahrzeug erfolgende Dämpfung (Kopplungsverluste) zwischen der Antenne am tragbaren Funkgerät und der Koppelsonde auszugleichen, ist bevorzugt zwischen die Koppelsonde und die Sende-Empfangs-Antenne am Fahrzeug eine Verstärkeranordnung geschaltet. Üblicherweise wird im Gegensprechverkehr (Duplex) gearbeitet. Dabei ist die Empfangsfrequenz gegenüber der Sendefrequenz verschoben (Duplex-Abstand). Die Verstärkeranordnung ist daher bevorzugt als Zweiwegeverstärker ausgebildet und weist zwei Duplexweichen und zwei Linearverstärker auf.

Besonders geringe Kopplungsverluste entstehen, wenn die Koppelsonde an der Rückenlehne des Fahrzeugsitzes angebracht wird, auf den sich der das tragbare Funkgerät tragende Polizist üblicherweise setzt.

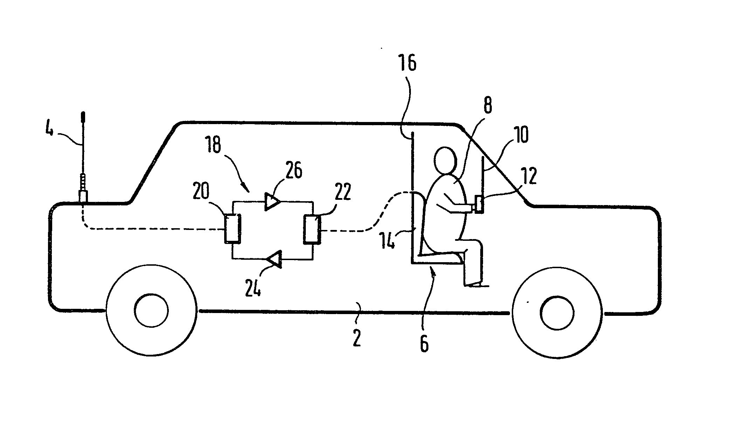

Die Erfindung wird im folgenden an einem Ausführungsbeispiel unter Hinweis auf die beigefügte Zeichnung beschrieben.

Die Zeichnung zeigt ein Polizeikraftfahrzeug 2, an dem eine Sende-Empfangs-Antenne angebracht ist. Auf einem vorderen Sitz 6 sitzt ein Polizist 8 mit einem eine kleine Antenne 1o aufweisenden tragbaren Sende-Empfangs-Gerät 12. An der Rückenlehne 14 des Sitzes 6 ist eine Koppelsonde 16 angebracht. Die Koppelsonde 16 ist mit der am Fahrzeug angebrachten Sende-Empfangs-Antenne 4 über einen Zweiwegeverstärker 18 verbunden. Dieser Zweiwegeverstärker enthält zwei Duplexweichen 2o, 22, zwischen denen parallel und gegensinnig zwei Verstärker 24, 26 geschaltet sind.

- 1 -

Patentansprüche

1. Vorrichtung zur Ankopplung einer an einem Fahrzeug, insbesondere an einem Polizeikraftfahrzeug, angebrachten Sende-Empfangs-Antenne mit einem tragbaren Sende-Empfangs-Gerät, g e k e n n z e i c h n e t durch eine in dem Fahrzeug (2) angeordnete, mit der Sende-Empfangs-Antenne (4) verbundene Koppelsonde (16).

2. Vorrichtung nach Anspruch 1, dadurch g e k e n n - z e i c h n e t , daß zwischen die Koppelsonde (16) und die Sende-Empfangs-Antenne (4) eine Verstärkeranordnung (18) geschaltet ist.

3. Vorrichtung nach Anspruch 1, dadurch g e k e n n - z e i c h n e t , daß die Verstärkeranordnung (18) zwei Duplexweichen (2o, 22) und zwei Verstärker (24, 26) enthält.

4. Vorrichtung nach einem der vorstehenden Ansprüche, dadurch g e k e n n z e i c h n e t , daß die Koppelsonde (16) an der Rückenlehne (14) eines Fahrzeugsitzes (6) angebracht ist.

# EUROPÄISCHER RECHERCHENBERICHT

Nummer der Anmeldung

EP 80103861.3

Europäisches Patentamt

| EINSCHLÄGIGE DOKUMENTE | | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| X | DE - A1 - 2 352 596 (AB TELEPLAN) <br> + Fig. 1,2; Seite 1, Zeilen 6, 7; Seite 3, Zeile 36 - Seite 4, Zeile 3; Seite 4, Zeilen 13-20; Seite 4, Zeile 29 - Seite 5, Zeile 5; Ansprüche 5, 7 + <br> -- | 1,2 | H 04 B 1/38 <br> H 04 B 7/26 <br> H 04 B 5/02 |
| X | US - A - 4 054 837 (HIBBS) <br> + Fig. 1,2; Zusammenfassung + <br> ---- | 3 | |

**RECHERCHIERTE SACHGEBIETE (Int. Cl.³)**

H 04 B 1/00

H 04 B 5/00

H 04 B 7/00

H 04 Q 7/00

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

| X | Der vorliegende Recherchenbericht wurde für alle Patentansprüche erstellt. |
|---|---|

| Recherchenort | Abschlußdatum der Recherche | Prüfer |
|---|---|---|
| WIEN | 03-10-1980 | DRÖSCHER |

EPA form 1503.1  06.78